# EUROPEAN PATENT APPLICATION

(11) **EP 1 738 825 A1**
(43) Date of publication of application: **03.01.2007**
(21) Application number: 05013844.5
(22) Date of filing: 27.06.2005
(51) Int. Cl.: B01J 35/00, B01J 35/06

(54) **A process for producing photocatalyst-coated fiber provided with protective films**

(71) Applicant: Kuo, Ming-Cheng, Chiayi County 616 (TW); Cheng, Meng-Song, Changhua City, Changhua County 500 (TW)
(72) Inventor: Cheng, Meng-Song, Changhua City Changhua County 500 (TW)
(74) Representative: Viering, Jentschura & Partner

(57) **Abstract**

A photocatalyst-coated fiber provided with protective films comprises a fiber substrate, a underlying protective film, a photocatalyst coating and a top protective film. A process for producing said fiber comprises applying directly a solution of an alcohol-based compound on said fiber to form an underlying protective film, then coating said photocatalyst solution on said underlying protective film to form a photocatalyst coating such that said underlying protective film can prevent said fiber from being degraded by said photocatalyst, and finally, applying a top protective film on said photocatalyst coating so as to impart said fiber photocatalysis, thereby the adsorption of fouls can be decreased greatly.

## Description

### BACKGROUND OF THE INVENTION

### 1. Field of the invention

The invention relates to a process for producing photocatalyst-coated fiber provided with protective films, and in particular, to a process for producing a fiber coated with protective films containing an alcohol-based compound over surfaces of the fiber substrate and the photocatalyst coating.

### 2. DESCRIPTION OF THE PRIOR ART

Conventional structure of photocatalyst-coated fiber, organic material or metal, as described in ROC Patent Application No. 091202434, is characterized mainly in that it is a structure of photocatalyst-coated fiber, organic material or metal comprises a nanoscale silicon dioxide sol-gel layer incorporated between the surface of the substrate of fiber, organic material or metal and a photocatalyst sol-gel layer. Nevertheless, this conventional structure has a major disadvantage in that said photocatalyst sol-gel layer might decompose progressively the surface of the substrate of fiber, organic material and like.

With respect to structures of fibers and fabrics made therefrom with UV light shielding effect known in the prior art, such as, those disclosed in ROC Patent Application No. 091202434, the feature in their constitution comprises a polyester fiber with UV light-shielding effect, characterized in that said polyester fiber has been incorporated with 0.5-1.0 wt% of inorganic titanium dioxide particles using potassium tripolyphosphate as the dispersant, wherein said inorganic titanium dioxide particles added therein has an average particle size of 1 - 100 nm and exhibits UV light reflective effect. There remained the same problem as the progressive decomposition of the surface of the substrate of fiber, organic material and like.

In view of those disadvantages derived from the above-mentioned conventional photocatalyst-coated fiber, the inventor of this application had devoted to improve and innovate, and had developed finally a process for producing a photocatalyst-coated fiber provided with protective films according to the invention.

### SUMMARY OF THE INVENTION

One object of the invention is to provide a photocatalyst-coated fiber characterized in that the photocatalyst coating of the fiber can function its catalysis by activating it with energy of light source having a specific wavelength.

Another object of the invention is to provide a process for producing a photocatalyst-coated fiber provided with a protective film, wherein, after absorbing a light energy, said photocatalyst can exert an oxidation effect to degrade off-flavors around the fiber material into carbon dioxide and water, and can persist semi-permanently.

Yet another object of the invention is to provide a photocatalyst-coated fiber, characterized in that, after being radiated with a light source, the hydrophilic property of the photocatalyst can be increased such that the moisture adhered on the fiber can penetrate into the interface between the foul and photocatalyst to lower greatly the adsorption of the foul.

The process for producing photocatalyst-coated fiber provided with protective film that can achieve the above-described objects comprises applying a protective film over the surface of the fiber substrate and the photocatalyst coating, characterized in that said protective film is formed by applying directly a solution of an alcohol-based compound over the fiber substrate or by dipping said fiber substrate in said solution, and heating at 80-180°C to form a underlying protective film that is firm and not liable to exfoliate and can prevent the fiber substrate to be degraded by the photocatalyst. Thereafter, a photocatalyst solution is applied over said underlying protective film to form a photocatalyst coating that can impart said fiber substrate with an sufficient catalysis. Finally, the solution of the alcohol-based compound is applied over the photocatalyst coating and a top protective film is formed by heating at 80~180°C.

### BRIEF DESCRIPTION OF THE DRAWINGS

The drawings disclose an illustrative embodiment of the present invention, which serves to exemplify the various advantages and objects hereof, and are as follows:
Figure 1 is a schematic end enlarged view illustrating the process for producing a photocatalyst-coated fiber provided with protective films;
Figure 2 is a part schematic view showing the protective film over the surface of the fiber and photocatalyst thereof;
Figure 3 is a schematic view showing the radiating of light on the surface of the fiber to yield oxidation and reduction reaction;

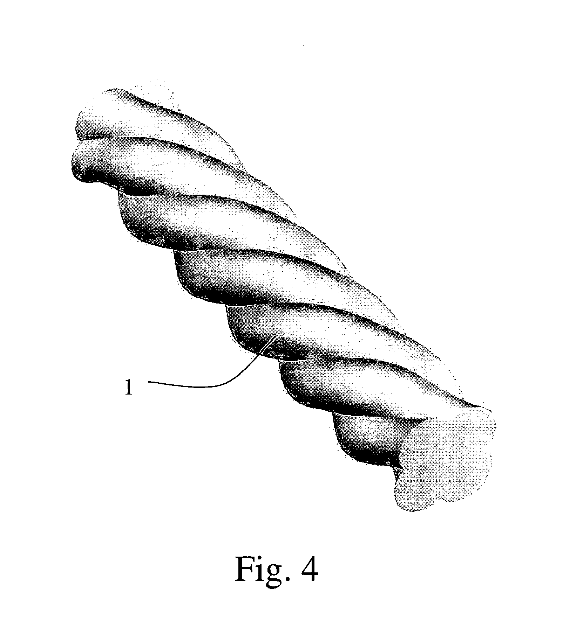

Figure 4 is a schematic view showing the fiber coated with a protective film and a photocatalyst coating;

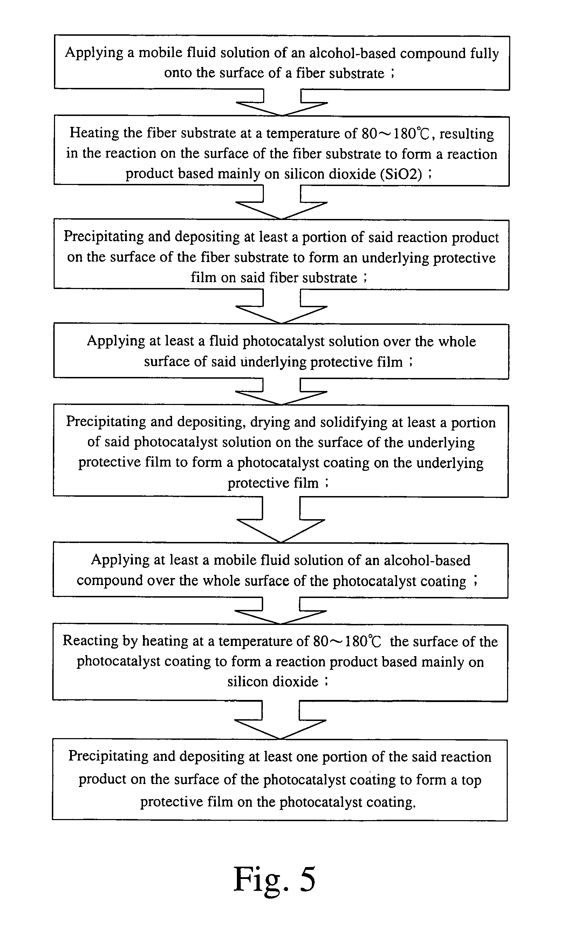

Figure 5 is a flowchart showing the process for producing photocatalyst-coated fiber provided with protective films according to the invention.

### DETAILED DESCRIPTION OF THE PREFERRED EMBODIMENT

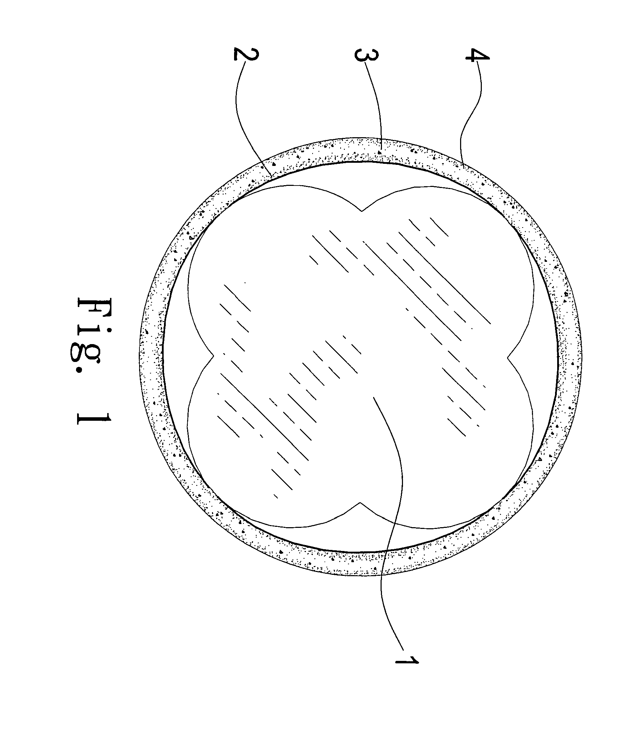

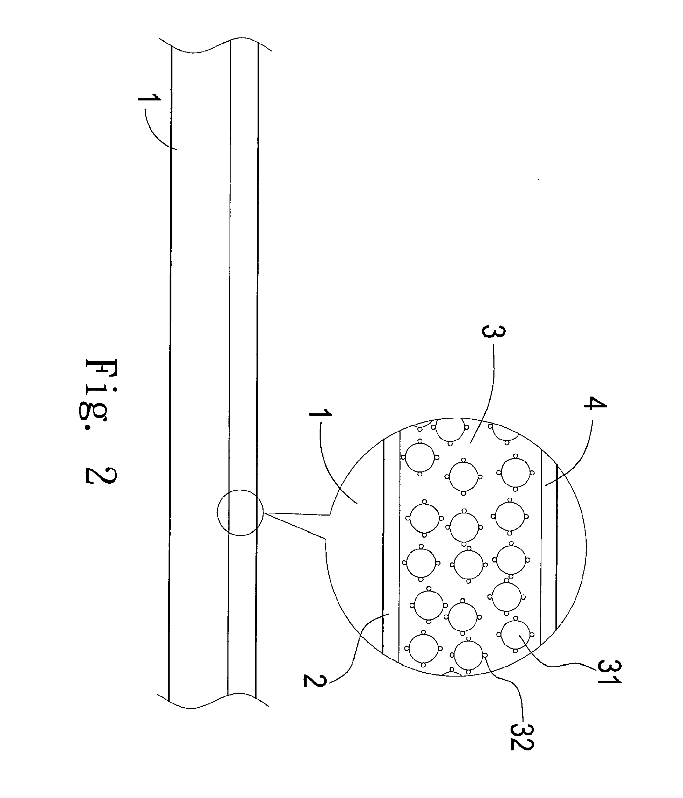

Referring to Fig. 1 and 2, in the process for producing photocatalyst-coated fiber provided with protective films, the photocatalyst 3 is composed mainly of titanium dioxide (TiO₂) material 31 of 5 - 30 nm incorporated with copper particle 32 and is applied over the surface of a substrate such as manmade fiber, natural fiber and synthetic fiber to enhance the catalytical ability of the nanoscale titanium dioxide 31 photocatalyst. Copper particles 32 loaded over the surface of the nanoscale titanium dioxide material 31 can direct electrons 6 and lowers greatly the re-bonding between electrons 6 from titanium dioxide and the electric holes, thereby increases dramatically the absorption efficiency against the ultraviolet light or strong light or light energy 5.

The titanium dioxide material 31 can react with carbon dioxide and water molecules adhered on the surface of the titanium dioxide material 31 by means of the oxidative power of electric holes 7 generated from this material and also the reductive power of electrons 6, thereby generates free radicals having extremely strong oxidative power to perform operations such as sterilizing, de-odoring, degrading organic material and the like. Further, since photocatalyst of the nanoscale titanium dioxide material 31 exhibits colorless, odorless and nontoxic features, as well as photocatalyst itself is not involved in the reaction, the photocatalyst will not loss, exhibit outstanding performance in the light-catalyzed physical reaction and is capable of degrading strongly various harmful substances and organic material in air.

However, since fibers made by synthetic process or fibers made through chemical treatment and mechanical procession on a natural polymer as the raw material has its substrate 1 itself an organic material, the regenerated material or synthetic material obtained by dipping nanoscale titanium dioxide material 31 into the surface of the fiber substrate 1 might be degraded by the nanoscale titanium dioxide material 31. The key point of preventing the fiber substrate 1 from oxidative degradation by the nanoscale titanium dioxide material 31 in its light-catalyzed physical reaction according to the invention comprises: before applying a photocatalyst 3 containing titanium dioxide material 31 onto the fiber substrate 1,applying a protective film of mobile fluid alcohol-based compound over the fiber substrate 1, and then reacting by heating at 80 ~ 180°C to form a firm film over the surface of the fiber substrate 1, wherein said film is a reaction product based mainly on silicon dioxide (SiO₂) and is not readily to exfoliate; during the reaction, allowing at least a portion of the reaction product precipitate and deposit on the surface of the fiber substrate 1 to form a underlying protective film 2 that can insulate completely the fiber substrate 1 from contacting with the photocatalyst 3, and prevent the oxidative oxidation of the fiber substrate 1 by the photocatalyst 3.

The protective film according to the invention is formed by applying directly or by impregnating the solution of an alcohol-based compound on the fiber substrate 1, and heating at 80 ~ 180 °C to form an underlying protective film 2 that is firm and not readily to exfoliate. Thereafter, a fluid photocatalyst 3 solution is applied over the whole underlying protective film 2, allowing a portion of the photocatalyst 3 to precipitate and deposit, dry and solidify on the surface of the underlying protective film 2 to form a photocatalyst coating 3 on its underlying protective film 2, wherein said photocatalyst coating 3 is sufficient to impart the fiber substrate the desired photocatalysis. Finally, a mobile fluid solution of an alcohol-based compound is applied again on the surface of the photocatalyst coating 3, and reacting by heating at 80 ~ 180°C to form a reaction product based mainly on silicon dioxide over the surface of the photocatalyst coating 3, wherein during the reaction, at least a portion of the reaction product may be precipitated and deposited over the surface of the photocatalyst coating 3 to form a top protective film 4 that can provide a function of lowering greatly the adsorption of fouls thereon.

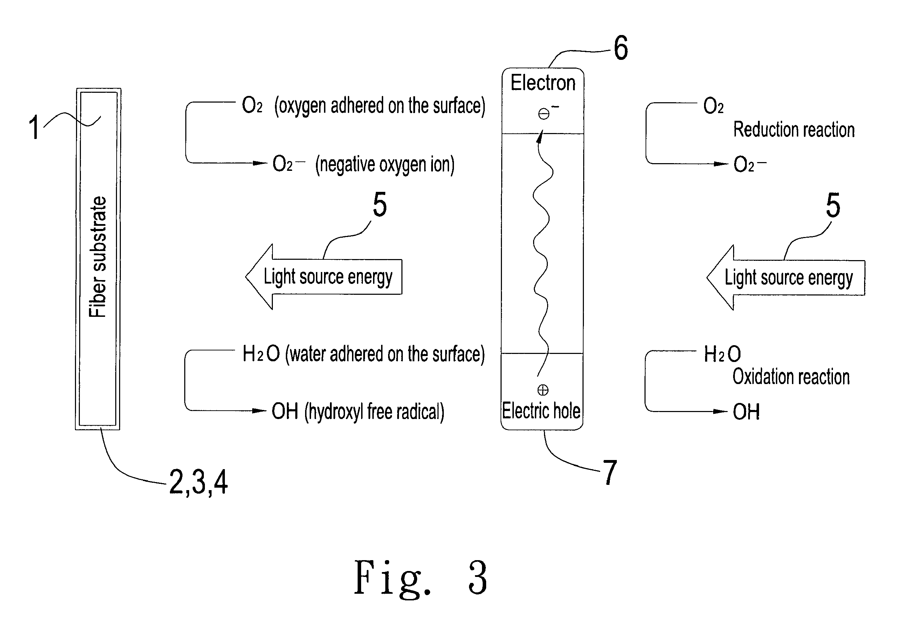

Referring to Fig. 3, a flow chart illustrates the process for producing photocatalyst-coated fiber provided with protective films, said process comprising steps:
(A) applying fully a mobile fluid solution of an alcohol-based compound onto the surface of the fiber substrate 1;
(B) heating the fiber substrate 1 at a temperature of 80 ~ 180°C , resulting in the reaction on the surface of the fiber substrate 1 to form a reaction product based mainly on silicon dioxide (SiO₂);
(C) precipitating and depositing at least a portion of said reaction product on the surface of the fiber substrate 1 to form an underlying protective film 2 on said fiber substrate 1;
(D) applying at least a fluid photocatalyst solution 3 over the whole surface of said underlying protective film 2;
(E) precipitating and depositing, drying and solidifying at least a portion of said photocatalyst 3 solution on the surface of the underlying protective film 2 to form a photocatalyst coating 3 on the underlying protective film 2;
(F) applying at least a mobile fluid solution of an alcohol-based compound over the whole surface of the photocatalyst coating 3;
(G) reacting by heating at a temperature of 80~180°C the surface of the photocatalyst coating 3 to form a reaction product based mainly on silicon dioxide; and
(H) precipitating and depositing at least one portion of the said reaction product on the surface of the photocatalyst coating 3 to form a top protective film 4 on the photocatalyst coating 3.

Referring to Fig. 3, a schematic view showing the oxidation-reduction reaction during light radiating on the surface of the fiber. When the sunlight or ultraviolet light irradiates on the surface of the fiber, light energy will be absorbed by the fiber, thereby electrons 6 and electric holes are generated, and they can react with moisture and oxygen to yield active oxygen O₂ and hydroxyl free radical OH·. The oxidation and reduction reactions, the absorption of sunlight, the irradiation of UV light or light energy 5, the reaction of moisture and oxygen in air, can be carried out continuously in this manner.

In summary, the process for producing photocatalyst-coated fiber provided with protective films has following features and effects over conventional products:
1. The semi-permanent oxidation can degrade off-flavor around the fiber material into carbon dioxide and water molecules.
2. The adsorption of fouls on the fiber material can be lowered greatly.
3. The oxidative degradation of the fiber material by the photocatalyst 3 can be prevented.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

## Claims

1. A process for producing photocatalyst-coated fiber provided with protective films, said process comprising steps:
(A) applying a mobile fluid solution of an alcohol-based compound fully onto the surface of said fiber substrate 1;
(B) heating the fiber substrate 1 at a temperature of 80 ~ 180°C , resulting in the reaction on the surface of the fiber substrate 1 to form a reaction product based mainly on silicon dioxide;
(C) precipitating and depositing at least a portion of said reaction product on the surface of the fiber substrate 1 to form an underlying protective film 2 on said fiber substrate 1;
(D) applying at least a fluid photocatalyst solution over the whole surface of said underlying protective film 2;
(E) precipitating and depositing, drying and solidifying at least a portion of said photocatalyst solution on the surface of the underlying protective film 2 to form a photocatalyst coating 3 on the underlying protective film 2;
(F) applying at least a mobile fluid solution of an alcohol-based compound over the whole surface of the photocatalyst coating 3;
(G) reacting by heating at a temperature of 80 ~ 180°C the surface of the photocatalyst coating 3 to form a reaction product based mainly on silicon dioxide; and
(H) precipitating and depositing at least one portion of the said reaction product on the surface of the photocatalyst coating 3 to form a top protective film 4 on the photocatalyst coating.

2. A process for producing photocatalyst-coated fiber provided with protective films as recited in claim 1, wherein said mobile fluid solution of an alcohol-based compound is a reaction product based mainly on silicon dioxide.

3. A process for producing photocatalyst-coated fiber provided with protective films as recited in claim 1, wherein after applying said alcohol-based compound, it is heated at a temperature of 80~180°C to form a reaction product.

4. A process for producing photocatalyst-coated fiber provided with protective films as recited in claim 1, wherein said photocatalyst 3 is composed of titanium dioxide of 5 ~ 30 nm and copper particles.
